# EUROPÄISCHE PATENTSCHRIFT

(11) **EP 0 830 014 B1**
(45) Veröffentlichungstag und Bekanntmachung des Hinweises auf die Patenterteilung: **12.07.2006**
(21) Anmeldenummer: 97202692.6
(22) Anmeldetag: 02.09.1997
(51) Int. Cl.: H04N 5/217, H04N 5/253

(54) **Erkennung von schräglaufenden Kratzern in Videosignalen**
Detection of oblique scratches in video signals
Détection de rayues inclinées dans des signaux vidéo

(30) Priorität: 11.09.1996 DE 19636865
(43) Veröffentlichungstag der Anmeldung: 18.03.1998
(73) Patentinhaber: BTS Holding International B.V., 4827 HG Breda (NL)
(72) Erfinder: Wischermann, Gerhard, Röntgenstrasse 24, 22335 Hamburg (DE)
(74) Vertreter: Lindemann, Robert

(56) Entgegenhaltungen:
- DE-A- 4 432 787
- GB-A- 2 140 245
- WISCHERMANN G: "DAS DIGITALE WETGATE. DIE DRITTE NOISE-REDUCER-GENERATION VON PHILIPS BTS" FERNSEH UND KINOTECHNIK, Bd. 50, Nr. 7, 1. Juli 1996 (1996-07-01), Seiten 387-390, XP000623232 ISSN: 0015-0142

## Beschreibung

Die Erfindung betrifft ein videosignalverarbeitendes Gerät mit einer Anordnung zur Erkennung von Laufkratzern. Die Erfindung betrifft auch die Anordnung zur Erkennung von Laufkratzern als solche, sowie ein Verfahren zur Erkennung von Laufkratzern.

Ältere, insbesondere häufig verwendete Filme weisen oft vertikale Laufschrammen auf, die sich kontinuierlich über längere Bereiche des Filmes erstrecken. Diese Kratzer können bereits in der Filmkamera entstanden sein, oder während des Kopierprozesses, oder aber auch durch häufiges Abspielen des Filmes.

Bei der Wiedergabe solchen Filmmaterials treten die Kratzer, je nach dem ob sie in positiven Filmmaterial oder negativen Filmmaterial vorlagen, als weiße oder schwarze horizontale Bildstreifen auf. Aus DE 44 32 787.0 ist ein Verfahren und eine Schaltung zum Erkennen und Verdecken von durch vertikal verlaufende Filmkratzer verursachten Fehlern in einen Videosignal bekannt, bei dem ein Fehlersignal an von gestörten Bildpunkten erzeugten Fehlstellen abgeleitet und in Form eines Steuersignals für die Verdeckung der Fehler im Videosignal benutzt wird. Um Kratzer von anderen sich vertikal erstreckenden Bilddetails, wie zum Beispiel Fahnenmasten, sicher unterscheiden zu können, wird das Fehlersignal nur dann erzeugt, wenn eine einstellbare, lokal beschränkte Kratzerbreite in horizontaler Richtung nicht überschritten wird und wenn jeder Kratzer im wesentlichen vertikal verläuft und wenn die Kratzerlänge etwa der Filmbildhöhe entspricht. Mit Hilfe des Fehlersignals werden schließlich die gestörten Stellen im Videosignal durch das entsprechende tiefpaßgefilterte Videosignal ersetzt, so daß die Bildpunkte des Kratzers Helligkeit und Farbe der Bildpunkte in der näheren Umgebung des Kratzers annehmen und auf diese Weise sehr starke Kontrastunterschiede vermieden werden.

Wie es sich gezeigt hat, lassen sich mit dem bekannten Verfahren Laufkratzer, die genau der Laufrichtung des Filmes entsprechen, sicher verdecken. Leider hat sich gezeigt, daß bestimmte Kratzer, die im spitzen Winkel zur Laufrichtung des Filmes stehen, mit dem bekannten Verfahren und der bekannten Schaltung nicht erfasst werden. Ein solcher Kratzer, der sich nicht exakt senkrecht über das Filmbild erstreckt, wandert je nach Neigung des Kratzers zur Hochachse des Filmbildes nach rechts oder nach links und tritt so besonders verstärkt in Erscheinung. Wie sich herausgestellt hat, entstehen solche, im folgenden als schräglaufend bezeichnete Kratzer hauptsächlich während des Kopierprozesses im Kopierwerk.

Mit dem bekannten Verfahren und der bekannten Anordnung können schräglaufende Kratzer nicht zufriedenstellend verdeckt werden, da beispielsweise eine Anhebung der einstellbaren Kratzerbreite die Gefahr in sich birgt, daß Bildobjekte mit vertikal verlaufenden Strukturen fälschlicher Weise als schräglaufender Kratzer erkannt und verdeckt würden.

Die GB 2 140 245 A offenbart einen Filmabtaster, bei dem zur Verdeckung von Laufkratzern die horizontale Lage eines Kratzers in den einem abgetasteten Bild vorhergehenden und nachfolgenden Filmstrichen ermittelt wird. Der als linear angenommene Kratzerverlauf wird dazu verwendet, für jede abgetastete Zeile des Filmbildes ein Schaltsignal zu generieren, welches die interpolierte Lage des Kratzers in der jeweiligen Zeile signalisiert.

In dem Artikel "Das digitale Wetgate" von G. Wischermann, FKT 7/96, S. 387 - 390 sind Filtermethoden offenbart, welche zur Verdeckung von Laufkratzern in Filmbildern angewendet werden können.

Der Erfindung liegt die Aufgabe zugrunde, ein verbessertes Verfahren zur Bearbeitung von Videosignalen anzugeben, bei dem im Videosignal enthaltene schräglaufende Kratzer von anderen, kratzerähnlichen Bildstrukturen sicher unterschieden werden können.

Diese Aufgabe wird durch die in Anspruch 1 angegebenen Verfahrensschritte gelöst.

Es ist bekannt, daß sich bei schräglaufenden Kratzern die Horizontalpositionen, an denen ein Kratzer einen unteren Bildrand verläßt um im nachfolgenden Bild an dessen oberen Bildrand einzutreten, trotz des zwischen den Filmbildern liegenden Filmstrichs relativ geringfügig unterscheiden, während bei schrägstehenden Bildobjekten gleichen Neigungswinkels ein wesentlich größerer Abstand auftritt. Bei einem vermuteten Kratzer ist es daher sogar ausreichend, nur noch zu prüfen, ob sich Teilstrecken des Kratzers über oberen und unteren Bildrand hinaus in das jeweilige vorangehende bzw. nachfolgende Bild an jeweils vergleichbarer Horizontalposition erstrecken.

Das Verfahren zur Erkennung von Laufkratzern sieht vor, die Länge eines Kratzers abschnittsweise als Kratzerteilstrecken im jeweiligen Bild zu ermitteln und nur dann ein Kratzer anzuzeigen, wenn die abschnittsweise ermittelten Kratzerteilstrecken eine bestimmte Mindestlänge aufweisen. Auf diese Weise kann als zusätzliches Kriterium die Länge eines Kratzers in eine Entscheidung ob ein Kratzer vorliegt mit einbezogen werden, um die Gefahr von Fehldetektionen noch weiter zu verringern. Durch die Detektion von Kratzerteilstrecken ist es ist es möglich auch solche Kratzer zu erkennen, die Unterbrechungen aufweisen.

In einer weiteren Ausgestaltung der Erfindung ist die Anordnung zur Erkennung von Kratzern dazu vorgesehen, die Positionen von am oberen und unteren Bildrand eines Bildes N festgestellten, sich ins vorangehende, bzw. folgende Bild erstreckenden Kratzerteilstrecken miteinander zu vergleichen und nur dann einen Kratzer anzuzeigen, wenn obere und untere Horizontalpositionen der sich ins vorangehende bzw. folgende Bild erstreckenden Kratzerteilstrecken einen bestimmten Abstand nicht überschreiten. Auf diese Weise ist es möglich den Neigungswinkel, den ein Laufkratzer maximal zur Laufrichtung eines abgetasteten Films einnehmen darf, um noch als Laufkratzer erkannt zu werden, einzustellen. Durch geeignete Wahl des Abstandswertes auf den maximal zu erwartenden Neigungswinkel eines Kratzers, werden Fehldetektionen vermieden.

In einer besonderen Ausgestaltung der Erfindung ist die Anordnung zur Erkennung von Laufkratzern dazu vorgesehen, die Position von als Kratzer in Frage kommenden Bildteilen am oberen Bildrand eines Bildes zu bestimmen und mit der Position von als Kratzer in Frage kommenden Bildteilen am unteren Bildrand eines vorangehenden Bildes zu vergleichen, um übereinstimmende Positionen des oberen Bildrandes zu ermitteln und die Position von als Kratzer in Frage kommenden Bildteilen am unteren Bildrand eines Bildes zu bestimmen und mit der Position von als Kratzer in Frage kommenden Bildteilen am oberen Bildrand eines folgenden Bildes zu vergleichen, um übereinstimmende Positionen des unteren Bildrandes zu ermitteln, und nur dann einen Kratzer zu signalisieren, wenn innerhalb eines bestimmten Bereichs übereinstimmende Positionen eines Kratzers am oberen Bildrand und unteren Bildrand ermittelt werden können. Diese Ausgestaltung ermöglicht eine einfache Detektion, wobei als Kratzer in Frage kommende Bildteile durch geeignete Vorfilterung des zu untersuchenden Videosignals ausgewählt werden.

Die Erfindung wird nun anhand eines in den Zeichnungen dargestellten Ausführungsbeispiels näher beschrieben und erläutert. Es zeigen:
- Fig. 1: einen Filmabtaster mit einer Anordnung zur Erkennung und Verdeckung von Laufkratzern einschließlich schräglaufenden Laufkratzern
- Fig. 2: Filmbilder mit schrägstehendem Bildobjekt und schräglaufendem Kratzer
- Fig. 3: auf Filmbilder angewandte Verfahrensschritte zur Erkennung und Maskierung von insbesondere schräglaufenden Kratzern
- Fig. 4: Ein in Bildstreifen zerlegtes Videobild mit einem Spaltenblock
- Fig. 5: Aus Maskierungsblöcken zusammengesetzte Kratzermaske eines Videobildes
- Fig. 6: Übersicht über eine Schaltungsanordnung zur Erkennung von Laufkratzern, insbesondere schräglaufenden Laufkratzern
- Fig. 7: Schaltungsanordnung eines Impulspaßfilters und eines Kratzerstreckendetektors

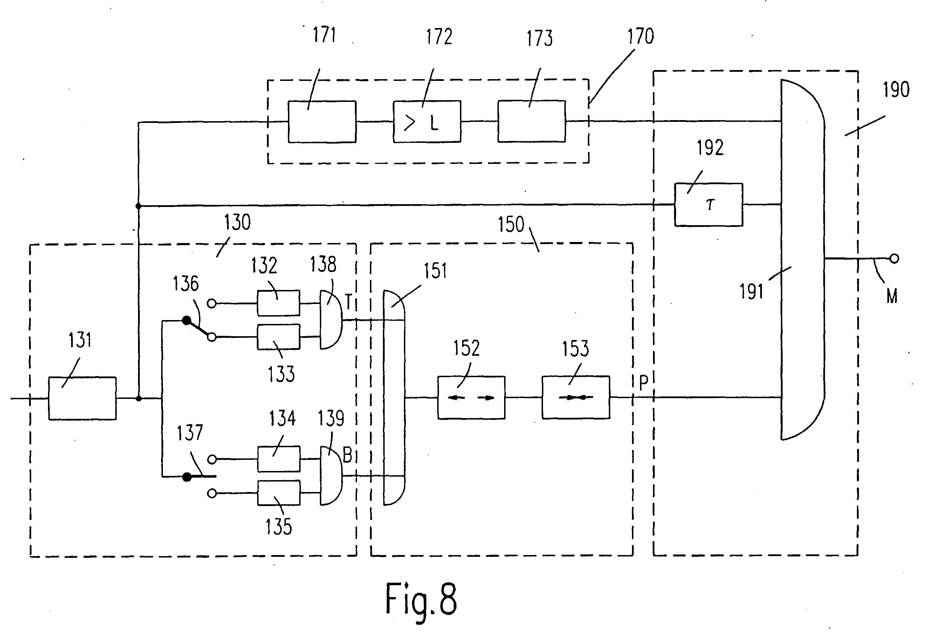

- Fig. 8: Schaltungsanordnung eines Fortsetzungsdetektors, eines Kratzerhubdetektors, eines Maskengenerators und eines Kratzerlängendetektors
- Fig. 9: Schaltungsanordnung eines Kratzerkonturverstärkers.

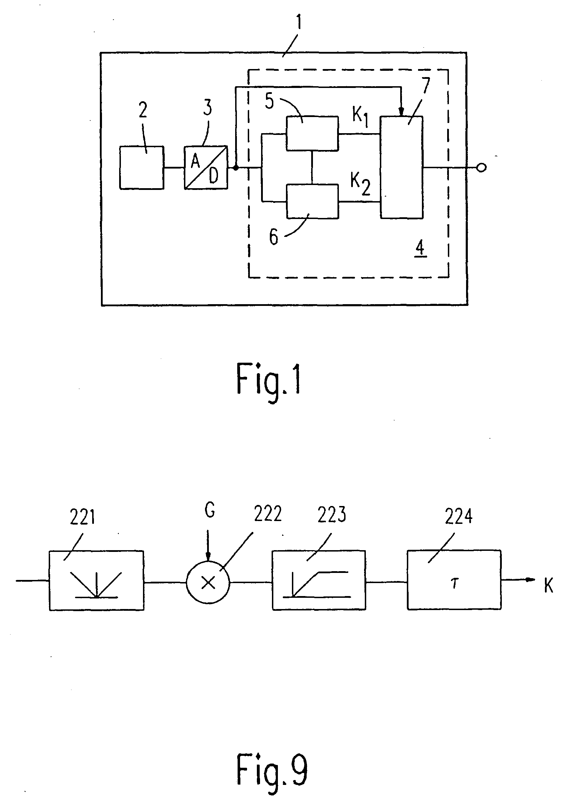

Figur 1 zeigt ein Blockschaltbild eines Filmabtasters 1, bei dem das in einem Abtaster 2 gewonnene analoge Videosignal eines abgetasteten Film in einem Analog-Digital Umsetzer 3 in digitale Luminanz- und Chrominanzsignale umcodiert wird. In einer Anordnung zur Störsignalbefreiung 4 sind verschiedene Detektoren 5, 6 dazu vorgesehen, Fehler im abgetasteten Videosignal zu erkennen und durch Störstellensignale K₁, K₂ zu kennzeichnen. Bei den Detektoren handelt es sich um einen Detektor zur Erkennung von Kratzern (scratch detector) 5, ausgebildet nach den erfindungswesentlichen Merkmalen zur Erkennung von schräglaufenden Kratzern und beispielsweise um einen Detektor zur Erkennung von Schmutzpartikeln (dirt detector) 6. Durch die Störstellensignale K₁, K₂ wird ein Medianfilter 7 angesteuert, welches Bildbereiche, die als Fehler eingestuft wurden, durch deren mediangefilterte Ersatzwerte ersetzt.

Die erfindungsgemäße Anordnung zur Detektion von Laufkratzern ist jedoch nicht nur auf Filmabtaster beschränkt, sie kann in jeder Anordnung, die zur Störsignalbefreiung von Videosignalen verwendet wird sinnvoll eingesetzt werden, also auch beispielsweise in Zusammenhang mit der Wiedergabe von gespeicherten Videosignalen und auch als eigenständiges Gerät, in einem sogenannten "noise reducer".

Auch die Art des Quellensignals, sei es analog oder digital, spielt für das Wesen der Erfindung keine Rolle, da Signalumwandlungen jeder Zeit problemlos möglich sind.

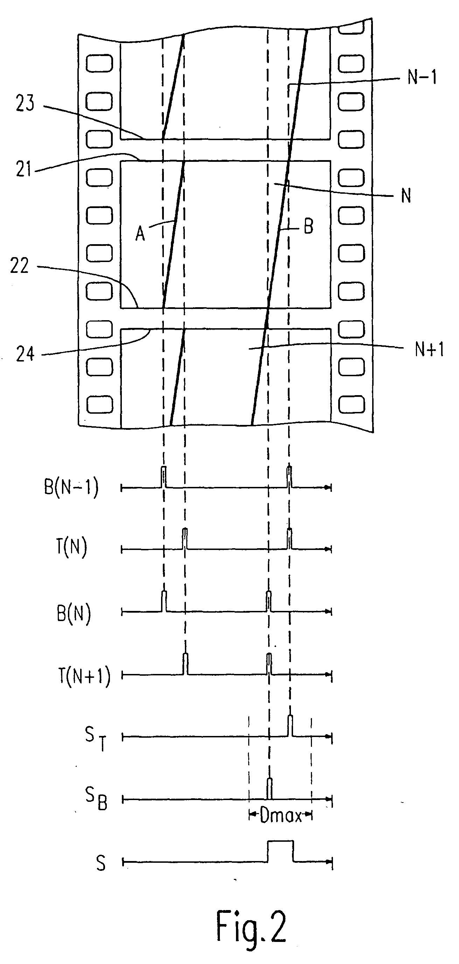

Figur 2 zeigt drei aufeinderfolgende Filmbilder N- 1, N, N + 1, wobei die einzelnen Filmbilder durch den sogenannten Filmstrich voneinander getrennt sind. Die Filmbilder enthalten sowohl ein schrägstehendes Objekt A, als auch einen schräg über alle Filmbilder hinweglaufenden Kratzer B. Der Übersicht halber zeigt die Figur 2 jeweils nur ein schrägstehendes Objekt A und einen schräglaufenden Kratzer B, obwohl mit den beschriebenen Verfahren und den beschriebenen Schaltungsanordnungen auch mehrere Kratzer in einem Bild mit mehreren schrägstehenden Objekten unterschieden werden können. Im Gegensatz zu singulären Bildstörungen, werden hier alle Kratzer, die sich über mehr als ein Bild erstrecken, unabhängig davon wie sie entstanden sind, als Laufkratzer bezeichnet.

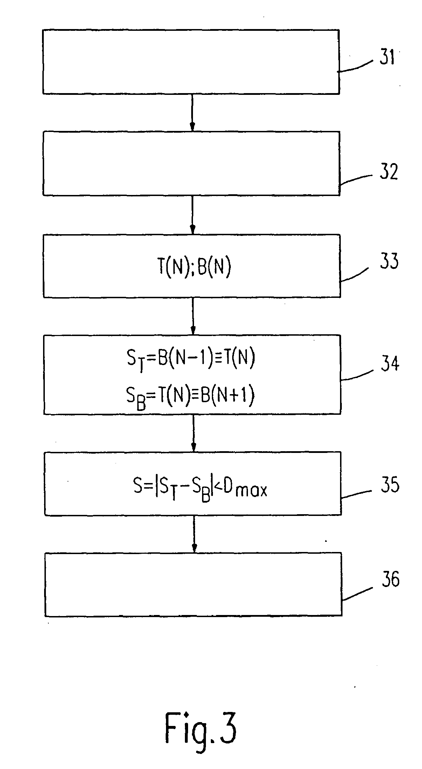

Zur Unterscheidung ob aufgefundene, sich in einem Filmbild vertikal erstreckende Strukturen einem Bildobjekt A zuzuordnen sind, und somit nicht verdeckt werden dürfen, oder aber einem schräglaufenden Kratzer B zugeordnet werden müssen, können folgende, in Figur 3 in einem Diagramm wiedergegebene Verfahrenschritte beispielsweise von einem programmierbaren Signalprozessor ausgeführt werden:

Als erstes werden aus einem Videosignal alle Signale von vertikalen Strukturen herausgefiltert (Block 31). Da auch schräglaufende Kratzer B im wesentlichen senkrecht zur Laufrichtung eines Filmes ausgerichtet sind, werden auch schräglaufende Kratzer auf diese Weise erfaßt. Vorzugsweise werden bei der Ausfilterung von vertikalen Strukturen nur solche erfaßt, die eine vorgebbare Maximalbreite nicht übersteigen, denn die Breite eines Kratzers ist im allgemeinen auf wenige Bildpunkte begrenzt. Falls nicht schon durch die Art der vertikalen Filterung vorgegeben, muß an dieser Stelle oder nach dem nächsten Verfahrensschritt geprüft werden, ob die entdeckten vertikalen Strukturen auch eine gewisse Mindestlänge aufweisen. Auf diese Weise werden punktförmige Bildstörungen bzw. Bilddetails mit entsprechender Intensität ausgeschieden.

In einem nächsten Verfahrenschritt (Block 32) werden aus den ausgefilterten vertikalen Strukturen, diejenigen Strukturen ausgesondert, die einen gewissen Mindestkontrast zu den sie umgebenden Bildinhalten aufweisen. Im folgenden werden die ausfilterten Strukturen als Feinstrukturen bezeichnet.

Im nächsten Verfahrensschritt (Block 33) werden die Horizontalpositionen T(N) aller am oberen Bildrand 21 eines betrachteten Bildes N auffindbaren Feinstrukturen und die Horizontalpositionen B(N) aller am unteren Bildrand 22 eines betrachteten Bildes N auffindbaren Feinstrukturen ermittelt und als mögliche Teilstrecken eines Kratzers zwischengespeichert.

Als nächstes (Block 34) werden die Positionen B(N-1) der Feinstrukturen am unteren Bildrand 23 eines vorangegangenen Bildes N-1 mit den Positionen T(N) der Feinstrukturen am oberen Bildrand 21 des jeweils betrachteten Bildes N verglichen und übereinstimmende Positionen bzw. innerhalb eines vorgebbaren Toleranzbereiches übereinstimmende Positionen als obere Kratzermarkierungen S_{T} gekennzeichnet bzw. in einer Liste gespeichert. Desgleichen werden die Positionen B(N) der Feinstrukturen am unteren Bildrand 22 eines Bildes mit den Positionen T(N+ 1) der Feinstrukturen am oberen Bildrand 24 eines dem aktuell betrachteten Bild N folgenden Bildes N + 1 verglichen und wiederum übereinstimmende Positionen bzw. innerhalb eines vorgebbaren Toleranzbereiches übereinstimmende Positionen als obere Kratzermarkierungen S_{B} gekennzeichnet bzw. in einer Liste gespeichert. Da bei schrägstehenden Bildobjekten A sowohl die Feinstrukturen des oberen Bildrands von Bild zu Bild an gleicher Stelle bleiben, als auch die Feinstrukturen am unteren Bildrand von Bild zu Bild an gleicher Stelle bleiben, ergeben sich keine übereinstimmenden Feinstrukturen zwischen oberem und unterem Bildrand, so daß schrägstehende Bildobjekte A auf diese Weise zuverlässig ausgeschieden werden.

Im nächsten Verfahrensschritt (Block 35) werden obere Kratzermarkierungen S_{T} und untere Kratzermarkierungen S_{B} miteinander verglichen und diejenigen Markierungen extrahiert, welche einen vorgegebenen Mindestabstand Dₘₐₓ, nicht überschreiten. Existieren eine obere und eine untere Kratzermarkierung innerhalb des vorgegebenen Toleranzbereiches Dₘₐₓ, so umschreiben deren Positionen, wenn sie identisch sind, einen exakt senkrecht verlaufenden Kratzer, bzw. bei auseinanderliegenden Positionen einen schräg verlaufenden Kratzer B.

Anhand innerhalb des Toleranzbereiches Dₘₐₓ zusammenliegender Positionen lassen sich nun die Bildpunkte ermitteln, die durch den Kratzer gestört sind und durch geeignet ermittelte Ersatzwerte, beispielsweise durch eine Medianfilterung gewonnene Ersatzwerte, ersetzt werden sollen (Block 36). Vorzugsweise, jedoch nicht zwingend, können zur Entscheidung welche Bildpunkte ersetzt werden die Bildpunkte innerhalb des durch die Kratzermarkierungen umschriebenen Bereichs gezielt ausgewählt werden, die die bisherigen Anforderungen an einen Kratzer (Kratzerbreite, Intensität, vertikale Mindestlänge) vollständig, bzw. zumindest teilweise erfüllen. Es lässt sich nun eine Maske erstellen, die den Verlauf des Kratzers angibt und mittels dieser Maske die fehlerhaften Bildpunkte bestimmen.

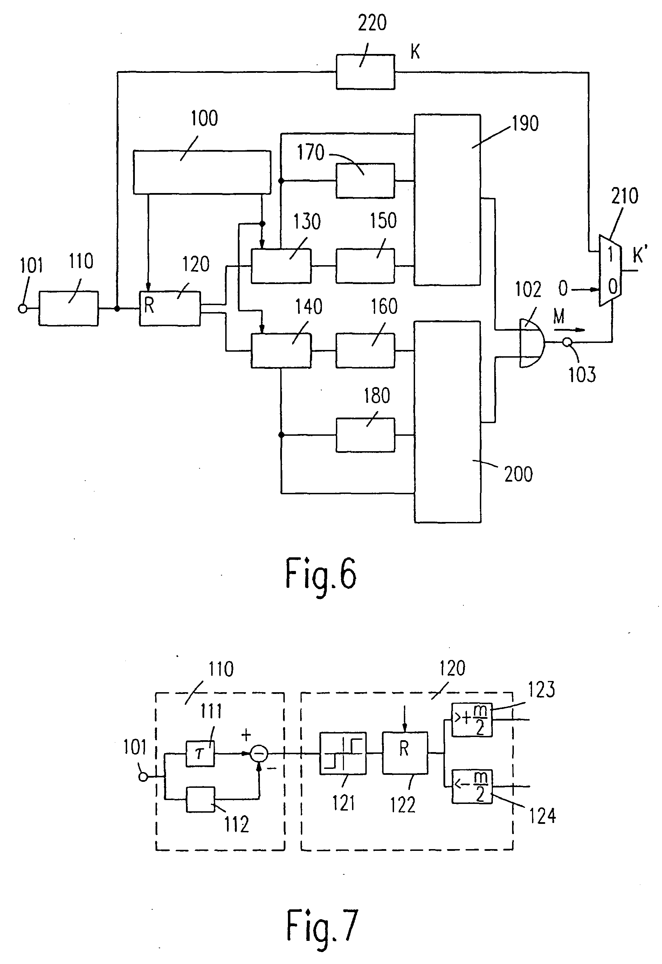

Figur 6 zeigt ein Blockschaltbild einer erfindungsgemäß ausgestalteten Kratzerdetektors zum Erkennen von sowohl exakt vertikal laufenden Laufkratzern als auch von schräglaufenden Laufkratzern. Der Kratzerdetektor läßt sich im wesentlichen in folgende Funktionsblöcke gliedern:
- ein Filter zur Ausfilterung impulsartiger Bildänderungen, im folgenden als Impulspaßfilter 110 bezeichnet
- einen Kratzerstreckendetektor 120, welcher vertikal übereinanderliegende impulsartige Bildänderungen als mögliche Teilstrecke eines Kratzers markiert
- Mittel zum Feststellen, ob sich eine am oberen Bildrand festgestellte Kratzerteilstrecke eines aktuellen Bildes, vom unteren Bildrand eines vorangegangenen Bildes in das aktuelle Bild erstreckt und eine am unteren Bildrand festgestellte Kratzerteilstrecke eines aktuellen Bildes sich auf den oberen Bildrand eines folgenden Bildes erstreckt, im folgenden auch als Fortsetzungsdetektoren 130, 140 bezeichnet
- Mittel, welche dazu vorgesehen sind, festzustellen, ob die am oberen und unteren Bildrand sich in das vorangehende bzw. nachfolgende Bild erstreckende Kratzerteilstrecken dem gleichen Kratzer zuordenbar sind, im folgenden als Kratzerhubdetektoren 150, 160 bezeichnet
- zwei Maskengeneratoren 190, 200, die ein Maskensignal zur Verdeckung eines detektierten Kratzers liefern, und schließlich
- zwei Kratzerlängendetektoren 170, 180 die dazu vorgesehen sind, als zusätzliches Unterscheidungskriterium die Gesamtlänge eines Kratzers im jeweils aktuellen Bild zu berücksichtigen.

Ferner ist eine Steuerschaltung 100 vorgesehen, die verschiedene, im einzelnen noch erläuterte Steuersignale erzeugt und ein Kratzerkonturverstärker 220, dessen Ausgangssignal mit dem Ausgangssignal der Maskengeneratoren 190, 200 in einem Multiplexer 210 zu einem Störstellenverdeckungssignal K kombiniert wird.

Figur 7 zeigt Schaltungsdetails von Impulspaßfilter 110 und Kratzerstreckendetektor 120. An einer Eingangsklemme 101 des Kratzerdetektors wird der Steuerschaltung 100 und dem Impulspaßfilter 110 der Luminanzanteil eines digitalisierten Videosignals zugeführt. Das Impulspaßfilter 110 extrahiert aus dem Luminanzsignal alle impulsartigen Änderungen einer bestimmten, einstellbaren Maximalbreite. Hierzu ist das Impulspaßfilter 110 vorzugsweise als komplementäres Median-Tiefpassfilter realisiert. Ein Subtrahierer 113 bildet die Signaldifferenz zwischen dem in einem ersten Laufzeitglied 111 verzögerten Eingangssignal und dem in einem Median-Filter 112 mediangefilterten Eingangssignal. Die Signaldurchlaufzeit des ersten Laufzeitgliedes 111 ist so bemessen, daß sie der Signaldurchlaufzeit des Median-Filters 112 entspricht. Durch Einstellung der Anzahl der aufeinander folgenden Bildpunkte, deren Medianwert im Median-Filter 112 ermittelt werden soll, kann die Durchlaßbreite des Impulspaßfilters 110 eingestellt werden. Ist das Median-Filterfenster beispielsweise auf fünf Bildpunkte eingestellt, so werden maximal zwei bildpunktbreite Impulse unverändert durchgelassen. Das komplementäre Median-Tiefpassfilter hat den Vorteil, daß die Kurvenform des Kratzers erhalten bleibt, und nicht wie beispielsweise in einem Hochpaßfilter eine Verbreiterung der Signalflanken eintritt. Weitere Einzelheiten zu Aufbau und Funktion des komplementären Median-Tiefpassfilters können der DE 44 32 787.0 Al entnommen werden.

Das Ausgangssignal des Impulpaßfilters 110 ist dem Kratzerstreckendetektor 120 zugeführt, der im Ausführungsbeispiel aus einem Quantisierer 121, einem Akkumulator122 und zwei Diskriminatoren 123, 124 gebildet wird. Der Quantisierer 121 weist zwei Schaltschwellen, eine untere und eine obere Schaltschwelle -C, +C auf. Bei Unterschreiten der unteren Schaltwelle -C gibt der Quantisierer den Wert -1 aus, bei Überschreiten der oberen Schaltschwelle +C den Wert + 1 und bei zwischen den beiden Schaltschwellen liegenden Eingangssignalen den Wert 0 aus. Die beiden Schaltschwellen -C und +C sind vorzugsweise auf 2 Prozent eines voll ausgesteuerten Luminanzsignals eingestellt, so daß bereits relativ geringe Kontraständerungen zu einem Überschreiten bzw. Unterschreiten der Schaltschwelle führen. Auf diese Weise ist sichergestellt, daß auch schwach ausgeprägte Kratzer bzw. Kratzer in sehr heller oder sehr dunkler Bildumgebung erkannt werden können. Ein Unterschreiten des negativen Schwellwertes -C deutet auf einen schwarzen Kratzer, ein Überschreiten des Schwellwertes +C auf einen weißen Kratzer. Somit werden nur impulsartige Änderungen mit entsprechendem Kontrastunterschied auf den Wert +1 bzw. -1 abgebildet. Hingegen werden sowohl Videosignale die keine impulsartigen Änderungen der Helligkeit aufweisen, unabhängig von ihrer Helligkeit, als auch Videosignale mit impulsartigen Änderungen, deren Impulsbreite größer als die eingestellte Impulsbreite des Median-Filters 112 ist, auf den Wert 0 abgebildet.

Wegen der zeilenweisen Verarbeitung des Videosignals ist bisher nur die vertikale Ausbreitung eines Kratzers, d. h. die Beschränkung eines Kratzers auf wenige horizontal nebeneinander liegende Bildpunkte geprüft worden. Das Wesen eines Kratzers liegt aber auch darin, daß er in untereinander liegenden Zeilen eines Videosignals Störungen an etwa der gleichen Vertikalposition erzeugt. Zur Detektion, ob die detektierten impulsartigen Änderungen Teil eines Kratzers sind, d. h. vertikal untereinander stehen, werden in dem Zeilenakkumulator 122 für eine jeweils vorgebbare Anzahl von Bildzeilen die Summen der Ausgangswerte des Quantisierers 121, getrennt nach Horizontalpositionen gebildet. Bei einer Abtastung eines Videobildes nach PAL-Norm, bei der auf den sichtbaren Teil eines Videobildes effektiv 575 Bildzeilen und 720 Bildpunkte pro Bildzeile entfallen, hat sich in der Praxis eine Akkumulation über jeweils 16 Zeilen als günstig erwiesen, wenn die Detektion in Halbbildern vorgenommen wird. Die Steuerschaltung 100 erzeugt zu Beginn jedes sichtbaren Videohalbbildes und nach jeweils Ablauf der voreingestellten Zeilen einen Rückstellimpuls, welcher die Inhalte des Zeilenakkumulators 115 auf den Wert 0 zurücksetzt. Somit erfolgt eine Detektion der Kratzer in vertikal übereinander liegenden Bildstreifen.

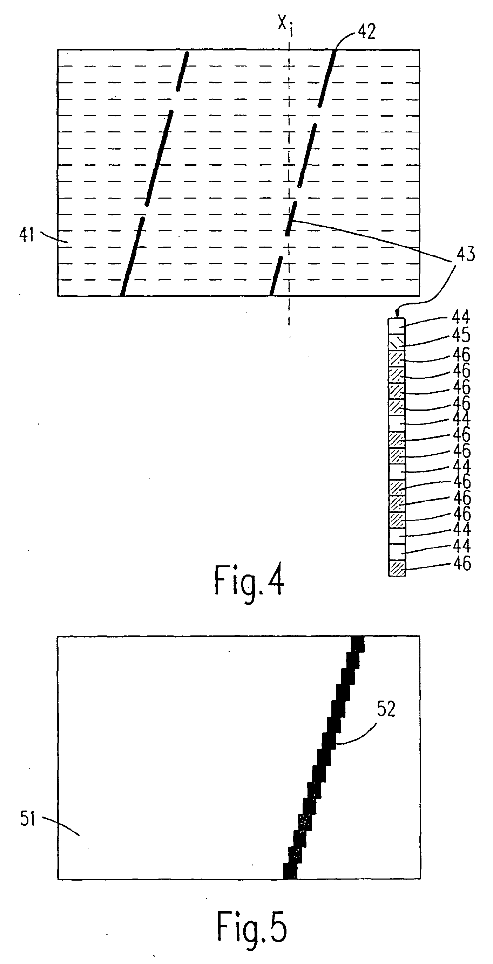

Figur 4 zeigt ein solches, in Bildstreifen 41 zerlegtes Videobild und einen Kratzer 42, der Unterbrechungen aufweist. Die an einer Horizontalposition xᵢ untereinanderstehenden Bildpunkte eines jeweiligen Bildstreifens 41 bilden jeweils einen Spaltenblock 43; die Anzahl der Bildpunkte eines Spaltenblocks 43 entspricht der Anzahl der zur Bildstreifenbildung verwendeten Bildzeilen. Bei 237,5 Zeilen eines Halbbildes, wird somit jedes Halbbild in fünfzehn Bildstreifen zerlegt, wobei der unterste Bildstreifen nur durch ca. vierzehn Bildzeilen gebildet wird. Diese kleine Abweichung ist für die gewählte Verarbeitung der gemessenen Werte jedoch bedeutungslos.

Die sechzehn Bildpunkte des Spaltenblocks 43 der Figur 4 setzen sich zusammen aus fünf Bildpunkten 44 mit geringer Kontraständerung, einem Bildpunkt 45 mit Kontraständerung in den weißen Bereich und zehn Bildpunkten 46 mit Kontraständerung in den schwarzen Bereich. Der Vorteil der Akkumulation der nach Bildstreifen getrennt erfaßten Kratzerteilstrecken besteht darin, daß Bilddetails ohne impulsartigen Verlauf (Ausgangswert des Quantisierers 121 ist 0) den Akkumulationswert nicht verändern und Bilddetails, die impulsartige Änderungen in den weißen Bereich (Ausgangswert des Quantisierers 121 = +1) und an anderer Stelle der Spalte einen impulsartigen Verlauf in den schwarzen Bereich (Ausgangswert des ersten Diskriminators 121 = -1) aufweisen, sich gegeneinander aufheben (Summe von -1 und + 1 = 0). Nur wenn innerhalb eines Spaltenblocks 43 des jeweilig betrachteten Bildstreifens 41 die Summe der Kontrastunterschiede in einen Bereich der Helligkeit (hell bzw. dunkel) die Summe der Kontrastunterschiede in den entgegengesetzten Bereich der Helligkeit (dunkel bzw. hell) überwiegen, weicht das Ergebnis der Akkumulation deutlich von Null ab. Dies hat zur Folge, daß zufällig verteilte impulsartige Bilddetails mit entgegengesetzten Kontrastunterschieden ausgemittelt werden, während längere vertikal verlaufende Bilddetails, die die Bedingungen an Impulsform und Kontrastunterschied erfüllen, verstärkt werden.

Die Ausgangswerte des Zeilenakkumulators 122 sind hierzu den Diskriminatoren 123, 124 zugeführt, wobei der erste Diskriminator 123 ein Ausgangssignal abgibt, wenn das Akkumulationsergebnis größer ist als die Hälfte der zur Bildstreifenbildung verwendeten Zeilen n, in unserem Beispiel also größer als der Wert +8, und der zweite Diskriminator 124 ein Ausgangssignal abgibt, wenn der Akkumulationswert kleiner ist als der negative Wert der Hälfte der zur Bildstreifenbildung verwendeten Zeilen, in unserem Beispiel also kleiner ist als der Wert -8. Hierdurch wird erreicht, daß bei Bilddetails eindeutigen Inhalts, bei dem die Spaltenblöcke mit impulsartigen Bilddetails einen Kontrastunterschied in nur einer Richtung (schwarz oder weiß) aufweisen, der Schwellwert leichter überschritten werden kann als bei Bilddetails mit widersprüchlichen Kontrastunterschieden. Bei dem in Figur 4 dargestellten Spaltenblock 43 ergibt sich aus fünf Bildpunkten 44 mit dem Wert 0, einem Bildpunkt mit dem Wert + 1 und zehn Bildpunkten mit dem Wert -1 ein Akkumulationswert von -9, so daß der zweite Diskriminator 124 einen Ausgangsimpuls zur Kennzeichnung einer schwarzen Kratzerteilstrecke abgibt.

Desweiteren ist durch die gewählten Schwellwerte sichergestellt, daß zumindest zweimal zwei Bildpunkte eines Kratzers oder zumindest einmal drei Bildpunkte eines Kratzers direkt untereinander liegen müssen, um als Bildpunkte einer Kratzerteilstrecke klassifiziert zu werden. Die auf diese Weise gegebene hohe Erkennungssicherheit von Kratzerteilstrecken ermöglicht es auch, wie bereits beschrieben, den Schwellwert des Kontrastunterschiedes entsprechend niedrig anzusetzen, so daß Fehlentscheidungen aufgrund eines niedrigen Kontrastwertes, die in Kauf genommen werden, um auch noch schwache Kratzer erkennen zu können, durch die Entscheidung über akkumulierte Werte eines Spaltenblocks wieder bereinigt werden.

Mit dieser Art von Detektion können ungefähr die Bildpunkte von Kratzern erfaßt werden, die ihre Vertikalposition über die ausgewählten Zeilen maximal um die Impulsdurchlaßbreite des Impulspaßfilters 110 ändern. Somit bestimmt die Anzahl der Bildzeilen eines Bildstreifens bei vorgegebener Maximalbreite eines Kratzers (= Durchlaßbreite des Impulspaßfilters 110) den maximalen Neigungswinkel, den ein schräglaufender Kratzer zur Hochachse eines Videobildes einnehmen darf, um im günstigsten Fall noch als Teilstrecke eines Kratzers erkennbar zu sein.

Die Ausgangssignale der Diskriminatoren 123, 124 setzen an den jeweiligen Horizontalpositionen eines jeweiligen Bildstreifens Markierungen für erkannte Kratzerteilstrecken, die im folgenden als Kratzermarkierungen bezeichnet werden. Die weitere Auswertung der Kratzermarkierungen erfolgt nun für schwarze und weiße Kratzer in getrennten Funktionsblöcken, wobei das Ausgangssignal des ersten Diskriminators 123 das Eingangssignal der Funktionsblöcke 130, 150, 170, 190 zur Auswertung von weißen Kratzern, und das Ausgangssignal des zweiten Diskriminators 124 das Eingangssignal der Funktionsblöcke 140, 160, 180, 200 zur Auswertung von schwarzen Kratzern bildet. Da die jeweiligen Funktionsblöcke jedoch identisch aufgebaut sind, wird im folgenden anhand von Figur 5 nur die Aufbereitung der weißen Kratzer beschrieben.

In einem ersten Zeilenspeicher 131 des Fortsetzungsdetektors 130 werden die logischen Ausgangswerte des ersten Diskriminators 123 zwischengespeichert. Der erste Zeilenspeicher 131 übernimmt jeweils am Ende eines Bildstreifens das Ergebnis, bevor der Akkumulator 122 zurückgesetzt wird. Im Fortsetzungsdetektor 130 sind noch vier weitere Zeilenspeicher 132, 133, 134, 135 vorgesehen, die durch die Steuerschaltung 100 so angesteuert werden, daß sie den Inhalt des ersten Zeilenspeichers 131 zu verschieden Zeitpunkten übernehmen. Die zeitlich unterschiedliche Übernahme wird in Figur 5 durch Umschalter 136, 137 symbolisiert.

Gehen wir im folgenden bei einem in einem aktuellen Bild N zu detektierenden Kratzer davon aus, daß in einem dem aktuellen Bild N vorangegangenen Bild N-1 der Inhalt des ersten Zeilenspeichers 131, nachdem die letzte Zeile des Bildes N-1 analysiert wurde, in den zweiten Zeilenspeicher 132 geschrieben wurde, und zwar bevor der erste Zeilenspeicher 131 zurückgesetzt wurde. Der zweite Zeilenspeicher 132 enthält somit die Kratzermarkierungen des untersten Bildstreifens (Zeilen 273-287 eines Halbbildes), des dem aktuellen Bild N vorangegangenen Bildes N-1. Wenn nun das aktuelle Bild N analysiert wird, steuert die Steuerschaltung 100 den dritten Zeilenspeicher 133 so, daß die Kratzermarkierungen der ersten sechzehn Zeilen, d.h. der Zeilen des obersten Bildstreifens des aktuellen Bildes N in den dritten Zeilenspeicher 133 geschrieben werden (Schalterstellung des ersten Umschalters 136 symbolisiert diesen Zeitpunkt). Nachdem im aktuellen Bild N die Kratzermarkierungen der letzten Zeilen, also der Zeilen 273 bis 287 gebildet wurden, wird das Ergebnis des ersten Zeilenspeichers 131 von der Steuerschaltung 100 im vierten Zeilenspeicher 134 gespeichert. Nachdem im nächsten Bild N+1 im ersten Zeilenspeicher 131 die Kratzermarkierungen der ersten 16 Zeilen des neuen Bildes N+1 vollständig eingeschrieben sind, überträgt die die Steuereinrichtung 100 durch entsprechende Steuersignale den Inhalt des ersten Zeilenspeichers 131 in den fünften Zeilenspeicher 135. Nun erst können durch positionsweisen Vergleich der Speicherinhalte von zweitem Zeilenspeicher 132 und drittem Zeilenspeicher 133 in einem ersten UND-Gatter 138 übereinstimmende Positionen S_{T} von Kratzermarkierungen zwischen unterem Bildrand eines vorangegangenen Bildes N-1 und dem oberen Bildrand eines aktuellen Bildes N, sowie durch gleichzeitigen positionsweisen Vergleich der Inhalte des vierten Zeilenspeichers 134 und des fünften Zeilenspeichers 135 in einem zweiten UND-Gatter 139 übereinstimmende Positionen S_{B} von Kratzermarkierungen zwischen unterem Bildrand eines aktuellen Bildes N und dem unteren Bildrand eines aktuellen Bild folgenden Bildes N-1 ermittelt werden. Mittels des Vergleichs mit den beiden UND-Gattern 138, 139 werden die Kratzerteilstrecken S aussortiert, die an der gleichen Stelle, an der sie den unteren Bildrand eines vorangehenden Bildes verlassen haben, sich im darauffolgenden Bild an der gleichen Stelle im oberen Bildrand fortsetzen, bzw. die Teilstrecken eines Kratzers die den unteren Bildrand eines Bildes verlassen haben, an der gleichen Horizontalposition in das nachfolgende Bild, an dessen oberen Bildrand eintreten. Wegen des relativ zur Bildhöhe eines Filmbildes geringen Höhe des Filmstrichs, trifft dies Bedingung sowohl auf Kratzer zu, die entweder genau senkrecht durchs Bild verlaufen oder aber leicht schräg durchs Bild verlaufen. Bilddetails A hingegen, die zwar zwei Grundbedingungen eines Kratzers, nämlich schmalen Umriß mit entsprechender Kontrastdifferenz erfüllen, und die leicht geneigt im Bild abgebildet sind, jedoch im Gegensatz zu einem Laufkratzer ihre Position von Bild zu Bild nicht verändern, können auf diese Weise von schräglaufenden Kratzern sicher unterschieden werden, da sowohl deren Horizontalposition zwischen unteren Bildrand des vorangegangenen Bildes N-1 und oberen Bildrand des aktuellen Bildes N, als auch die Horizontalposition von unterem Bildrand des aktuellen Bildes N und Horizontalposition des oberen Bildrandes des dem aktuellen Bild folgenden Bildes N+ 1 deutlich voneinander abweichen.

Bei mäßig geneigten Kratzern ändert sich deren Horizontalposition beim Durchlaufen des Filmstrichs nur unerheblich, so daß eine Überprüfung auf identische Kratzermarkierungen S_{T}, S_{B} völlig ausreicht. Zur Erkennung stärker geneigter Kratzer müßte statt nach identischen Kratzermarkierungen nach Kratzermarkierungen gesucht werden, die innerhalb eines vorgegebenen Toleranzbereiches auftreten.

Das Einlesen des Speicherinhalts des ersten Zeilenspeichers 131 durch die Steuereinrichtung 101 wird wie beschrieben laufend fortgesetzt, so daß die Kratzermarkierungen T eines obersten Bildstreifens jeweils abwechselnd in dritten bzw. fünften Zeilenspeicher 133, 135 und die Kratzermarkierungen B des untersten Bildstreifens eines jeweiligen Bildes jeweils abwechselnd in den zweiten bzw. vierten Zeilenspeicher132, 134 eingeschrieben werden. Auf diese Weise stehen für jedes auszuwertende Bild ..., N-1, N, N+1, ... jeweils ein Bild später, als für das Bild, für das die Auswertung vorgenommen werden soll, die jeweils paarweise benötigten Markierungen zur Verfügung. Da bei der anschließenden Zusammenfassung der Ausgangssignale T, B des ersten und zweiten UND-Gatters 138,139 in einem ODER-Gatter 151 diese als Eingangssignale eines ODER-Gatters ohne Änderung des Ausgangssignals beliebig vertauschbar sind, spielt es auch keine Rolle, daß bei jeder zweiten Auswertung eines Bildes die Bedeutung der Ausgangssignale T und B der beiden UND-Gatter 138, 139 vertauscht ist. Durch das beschriebene wechselweise Speichern kann jedoch der Speicherbedarf an Zeilenspeichern äußerst gering gehalten werden.

Im Kratzerhubdetektor 150 wird als nächstes überprüft, ob ein am oberen Bildrand detektierter, bildübergreifender Kratzer an einer Position S_{T} mit einer am unteren Bildrand detektierten bildübergreifenden Kratzerposition S_{B} korrespondiert, d.h. die Kratzerpositionen S_{T}, S_{B} so nahe aneinander liegen, daß sie wahrscheinlich von einem schräglaufenden Kratzer stammen. Hierzu werden die in einem ODER-Gatter-151 zusammengefaßten oberen Kratzermarkierungen S_{T} und unteren Kratzermarkierungen S_{B} in einem Expansionsfilter 152 um eine bestimmte Anzahl von m Bildpunkten verbreitert. Die Anzahl der Bildpunkte um die die Kratzermarkierungen verbreitert werden, bestimmt auch den Bereich innerhalb dessen schräg verlaufende Kratzer noch als schräglaufende Kratzer erkannt werden. In der Praxis hat sich eine Verbreiterung um jeweils 1 % der Bildpunkte einer Bildzeile nach links und nach rechts als günstiger Wert erwiesen.

Zur Verbreiterung der Kratzermarkierungen werden im Ausführungsbeispiel jeweils sechzehn nebeneinanderliegende Kratzermarkierungen betrachtet. Sobald einer dieser Kratzermarkierungen den logischen Wert Eins aufweist, werden auch alle anderen Kratzermarkierungen auf diesen Wert gesetzt. Durch anschließende Signalverschmälerung in einem Kompressionsfilter 153 um die gleiche Anzahl m von Bildpunkten, um die das Signal ursprünglich verbreitert wurde, bleibt nur dann ein Signal übrig, wenn die verbreiterten Bereiche einer oberen und unteren Kratzermarkierung nahtlos ineinander übergegangen sind, d.h. sich ganz oder teilweise überdeckt haben. Auf diese Weise ist sichergestellt, daß nur dann ein Signal, im folgenden als Kratzerübereinstimmungssignal P bezeichnet, erzeugt wird, wenn die Position des Kratzers, der am oberen Bildrand eintritt von der Position an der ein Kratzer den unteren Bildrand verläßt, nicht zu weit auseinander liegt, also der Neigungswinkel des Kratzers nicht zu groß ist. Fortsetzungsdetektor 130 und Kratzerhubdetektor 150 werden von der Steuerschaltung 100 so angesteuert, daß das Kratzerübereinstimmungssignal P in jeder Bildzeile eines aktuell betrachteten Bildes N erzeugt wird.

Da das Kratzerübereinstimmungssignal P sich über den gesamten Kratzerhub eines aktuellen Bildes erstreckt, überstreicht es bei schräglaufenden Kratzern auch viele Bildpunkte, die nicht durch Kratzer gestört sind. In einem Maskierungsgatter 191 des Maskenbildners 190 wird daher das Kratzerübereinstimmungssignal P mit den Kratzermarkierungen des aktuellen Bildes so verknüpft, daß nur der jeweils als Kratzerteilstrecke klassifizierte Spaltenblock eines jeden Bildstreifens maskiert wird. Hierzu werden die im ersten Zeilenspeicher 131 bildstreifenweise gespeicherten Kratzermarkierungen zeilenweise ausgegeben und in einem zweiten Laufzeitglied 172 entsprechend der Durchlauf- und Berechnungszeit von Kratzerstreckendetektor 130 und Kratzerhubdetektor 150 verzögert. Durch die UND-Verknüpfung reduziert sich das vom Maskierungsgatter 191 gelieferte Maskierungssignal M auf die jeweils als Kratzerteilstrecken detektierten Spaltenblöcke, so daß die Verdeckung auch bei schräg verlaufenden Kratzern nur jeweils schmale Bereiche des Bildes umfaßt. Auf diese Weise wird eine Verdeckung von Bildpunkten, die nicht Teil eines Kratzers sind, aber in der Nähe eines Kratzers liegen, vermieden.

Figur 5 zeigt eine auf diese Weise, aus Markierungsblöcken 52 zusammengesetzte Kratzermaske eines Videobildes 51. Aufgrund der vielen kleinen Maskierungsblöcke paßt sich die Kratzermaske sehr gut an Form und Verlauf des Kratzers an.

Mit der bisher aufgezeigten Anordnung wäre eine Verdeckung von sowohl völlig senkrecht durchs Bild laufenden Kratzern als auch schräg durchs Bild laufenden Kratzern hinreichend gegeben, da die Fortsetzung eines Kratzers vom unteren Bildrand eines vorangegangenen Bildes in den oberen Bildrand eines betrachteten Bildes und der Austritt eines Kratzers am unteren Bildrand eines betrachteten Bildes und das Auftauchen des Kratzers am oberen Bildrand des darauffolgenden Bildes in den meisten Fällen eine zuverlässige Detektierung eines Kratzers ergibt. Nur sehr wenige Bilddetails, die keine Kratzer sind würden alle diese Bedingungen erfüllen und fälschlicher Weise verdeckt werden. Eine vollkommene Kratzererkennung schließt jedoch auch die Betrachtung mit ein, ob der Kratzer sich auch weitgehend zusammenhängend durchs Bild bewegt. Hierzu enthält der Längendetektor 170 einen zweiten Zeilenakkumulator 171, mittels welchem alle Kratzermarkierungen spaltenweise, d.h. getrennt nach Horizontalposition, über jeweils ein ganzes Bild aufsummiert werden. Am Ende eines Bildes wird der Akkumulationswert einer jeden Bildspalte in einem Längendiskriminator 172 mit einem vorgebbaren Schwellwert L verglichen und, sofern der Schwellwert überschritten ist, in einem sechsten Zeilenspeicher 173 für die betreffende Horizontalposition eine Markierung gesetzt, die jeweils am Ende eines Bildes übernommen wird. Die markierten Horizontalpositionen bleiben auf diese Weise, jeweils für ein untersuchtes (Halb-)bild erhalten und werden zeilenweise, synchron zum Kratzerübereinstimmungssignal P ausgelesen. Da die Durchlaufzeit von Kratzerstreckendetektor 130 und Kratzerhubdetektor 150 auch einem (Halb-)bild entspricht, entsprechen sich auch die Bilder, für die das Kratzerlängensignal L und das Kratzerübereinstimmungssignal P erzeugt werden.

Mittels des Kratzerlängendetektors 170 wird auf die beschriebene Weise überprüft, ob ein bestimmter Anteil von Kratzermarkierungen an gleicher Horizontalposition auftritt und somit der Kratzer eine bestimmte Mindestausdehnung aufweist. Da der günstigste Wert für den Schwellwert L sowohl vom verwendeten Filmmaterial (der Bereich eines schwarzen Kratzers der durch ein dunkles Bilddetail läuft würde als Kratzer nicht erkannt werden und reduziert daher die in einem solchen Bild festgestellte Länge eines Kratzers) als auch von dem Neigungswinkel des Kratzers selbst abhängig ist, kann dieser Schwellwert je nach Bedarf von einem Bediener des Gerätes eingestellt werden. Beim Ausführungsbeispiel, bei dem ein Halbbild in fünfzehn Bildstreifen zerlegt wird, gibt beispielsweise ein Schwellwert L der Größe acht an, daß die aus Kratzerteilstrecken zusammengesetzte Gesamtlänge eines Kratzers mindestens die halbe Bildhöhe einnehmen muß, damit die Kratzermarkierungen des oberen und unteren Bildrandes auch tatsächlich als Teile eines Kratzer akzeptiert werden. Sollen Kratzer mit stärkerer Schrägneigung noch erkannt werden, so kann der Wert von L beispielsweise auch auf zwanzig Prozent gesenkt werden. Auch wenn dieser Wert relativ gering erscheint, so hat sich doch gezeigt, daß durch dieses zusätzliche Erkennungskriterium die Fehlerkennungsrate noch weiter gesenkt werden kann.

Zur Formung eines Korrektursignals, welches noch besser an die Kratzerform, insbesondere den Verlauf von schräglaufenden Kratzern angepaßt ist, wird im Ausführungsbeispiel das Maskierungssignal M zur Umschaltung des Multiplexers 210 verwendet, welcher bei aktivem Maskierungssignal M das von einem Kratzerkonturverstärker 220 gelieferte Signal durchschaltet. Im Ausführungsbeispiel ist dem Eingang des Kratzerkonturverstärkers 210 das Ausgangssignal des Impulspaßfilters 110 zugeführt, so daß nur Bilddetails mit entsprechender horizontaler Maximalbreite verstärkt werden. Ein Absolutwertbildner 221 sorgt für gleiche Berücksichtigung sowohl von schwarzen als auch weißen Kratzern. Durch Multiplikation der Abtastwerte in einem Multiplizierer 222 mit einem einstellbaren Verstärkungsfaktor G können schwache Kratzer angehoben werden. Eine Begrenzung des Ausgangssignals des Multiplizierers 222 in einem Begrenzer 223 schneidet das Ausgangssignal beim maximalen Pegel ab und verhindert die Auswirkungen eines internen Zahlenüberlaufs bei der Multiplikation. Ein nachgeschaltetes weiteres Laufzeitglied 224 gleicht Laufzeitunterschiede bei der Bildung des Maskierungssignals M aus. Mit dem Kratzerkontursignal K läßt sich die Kratzermaske noch weit besser an die Form des Kratzers anpassen. Nur dann, wenn ein Kratzer erkannt wurde, wird durch das Maskierungssignal M auf das Kratzerkontursignal K umgeschaltet, so daß das Kratzerkontursignal selbst als Störstellenverdeckungssignals K' benutzt wird.

Darüberhinaus werden im Ausführungsbeispiel als Eingangssignale des komplementären Median-Tiefpaßfilters Abtastwerte mit acht Bit Datenwortbreite verwendet und auch das komplementäre Median-Tiefpaßfilter gibt als Ausgangssignal Datenworte mit acht Bit Datenwortbreite aus. Während durch die Quantisierung im Kratzerdetektor nur noch zwei Bit Datenworte, bzw. ein Bit Signale verwendet werden, was die Verarbeitung dieser Signale erheblich erleichtert, wird die Konturverstärkung mit voller Datenwortbreite durchgeführt. Das Störstellenverdeckungssignal K' ist somit auch mehrwertig, wobei die Wertigkeit des Störstellensignals ein Maß für die Kratzerintensität darstellt. Mittels des mehrwertigen Störstellensignals K' läßt sich so die Stärke einer Verdeckung in Abhängigkeit von der Intensität eines Kratzers steuern. Hierdurch wird die Verdeckung noch weit weniger sichtbar.

## Patentansprüche

1. Verfahren zur Erkennung von Laufkratzern in Filmbilder repräsentierenden Videosignalen, wobei das Verfahren die folgenden Schritte umfasst:
a) Aufteilen der ein Filmbild (N) repräsentierenden Videosignale in eine Vielzahl mehrere Zeilen des Filmbildes umfassender Bereiche (41);
b) Herausfiltern von Signalen sich über mehrere Zeilen eines jeden Bereichs (41) erstreckender vertikaler Strukturen;
c) detektieren von Kratzern in den jeweiligen Bereichen (41);
d) detektieren, ob die an jeweiligen Positionen in den Bereichen (41) detektierten Kratzer sich an entsprechenden Positionen über mehrere aneinander angrenzende Bereiche (41) erstrecken und Bestimmen der Gesamtlänge der Kratzer;
e) Vergleichen der in Schritt d) ermittelten Gesamtlänge der jeweiligen Kratzer mit einem vorgegebenen Mindestwert.

2. Verfahren nach Anspruch 1, wobei das Verfahren außerdem die folgenden Schritte umfasst:
f) Abtasten des Bereichs zwischen dem unteren Rand eines vorhergehenden (N-1) und dem oberen Rand des abgetasteten (N) Bildes sowie des Bereichs zwischen dem unteren Rand des abgetasteten (N) Bildes und dem oberen Rand eines nachfolgenden (N+1) Bildes;
g) Signalisieren eines Kratzers im abgetasteten Bild (N), wenn die Position eines am oberen Rand des abgetasteten Bildes (N) detektierten Kratzers von derjenigen eines am unteren Rand des dem abgetasteten Bild (N) vorangehenden Bildes (N-1) detektierten Kratzers, beziehungsweise die Position eines am unteren Rand des abgetasteten Bildes (N) detektierten Kratzers von derjenigen eines am oberen Rand des dem abgetasteten Bild nachfolgenden (N+1) Bildes detektierten Kratzers in Zeilenrichtung eine einstellbare Abweichung nicht überschreitet.

3. Verfahren nach Anspruch 2, **dadurch gekennzeichnet, dass** ein Kratzer im abgetasteten Bild (N) nur dann signalisiert wird, wenn in einem von den in Schritt g) ermittelten Positionen von Kratzern aufgespannten Bereich innerhalb des abgetasteten Bildes (N) ein Kratzer ermittelt wird.

4. Verfahren nach einem der vorhergehenden Ansprüche, **dadurch gekennzeichnet, dass** das Detektieren der Kratzer in Schritt c) das Ausfiltern von Signalen vertikaler Strukturen mit einem vorgebbaren Mindestkontrast zu den sie umgebenden Bildinhalten umfasst.

5. Verfahren nach Anspruch 4, **dadurch gekennzeichnet, dass** das das Verfahren außerdem die folgenden Schritte umfasst:
h) Zuweisen von Akkumulationswerten zu den als zu einem Kratzer gehörig identifizierten Bildpunkten mehrerer aufeinander folgender Zeilen eines Bereichs (41), wobei Bildpunkten mit geringer bzw. ohne Kontraständerung der Wert 0, Bereichen mit einer Kontraständerung in den weißen Bereich der Wert +1 und Bereichen mit einer Kontraständerung in den schwarzen Bereich der Wert -1 zugewiesen wird;
i) Akkumulieren der zugewiesenen Akkumulationswerte über die mehreren aufeinander folgenden Zeilen;
j) Signalisieren eines Kratzers, wenn der Betrag des Ergebnisses der Akkumulation einen einstellbaren Schwellwert überschreitet.

6. Verfahren nach einem der vorhergehenden Ansprüche, **dadurch gekennzeichnet, dass** der Verlauf eines detektierten Kratzers in einem jeweiligen abgetasteten Bild (N) bestimmt wird und an eine Anordnung zur Korrektur oder Verdeckung von Kratzern übermittelt wird

7. Verfahren nach einem der vorhergehenden Ansprüche, **dadurch gekennzeichnet, dass** die maximale Breite der herausgefilterten vertikalen Strukturen einstellbar ist.

## Claims

1. Method for detecting running scratches in video signals representing film images, the method comprising the following steps of:
a) dividing the video signals representing a film image (N) into a multiplicity of regions (41) comprising a plurality of lines of the film image; b) filtering out signals of vertical structures extending over a plurality of lines of each region (41);
c) detecting scratches in the respective regions (41);
d) detecting whether the scratches detected at respective positions in the regions (41) extend at corresponding positions over a plurality of mutually adjacent regions (41), and determining the total length of the scratches;
e) comparing the total length of the respective scratches determined in step d) with a predetermined minimum value.

2. Method according to Claim 1, the method additionally comprising the following steps of:
f) scanning the region between the lower margin of a preceding image (N-1) and the upper margin of the scanned image (N) and also the region between the lower margin of the scanned image (N) and the upper margin of a succeeding image (N+1);
g) signaling a scratch in the scanned image (N) if the position of a scratch detected at the upper margin of the scanned image (N) and the position of a scratch detected at the lower margin of the image (N-1) preceding the scanned image (N), or the position of a scratch detected at the lower margin of the scanned image (N) and the position of a scratch detected at the upper margin of the image (N+1) succeeding the scanned image do not exceed an adjustable deviation in the line direction.

3. Method according to Claim 2, **characterized in that** a scratch in the scanned image (N) is signaled only when a scratch is determined in a region within the scanned image (N) that is spanned by the positions of scratches determined in step g).

4. Method according to one of the preceding claims, **characterized in that** detecting the scratches in step c) comprises filtering out signals of vertical structures with a predeterminable minimum contrast with respect to the image contents surrounding them.

5. Method according to Claim 4, **characterized in that** the method additionally comprises the following steps of
h) allocating accumulation values to the pixels - identified as being associated with a scratch - of a plurality of successive lines of a region (41), pixels having little or no contrast change being allocated the value 0, regions having a contrast change towards the white range being allocated the value +1 and regions having a contrast change towards the black range being allocated the value -1;
i) accumulating the allocated accumulation values over the plurality of successive lines;
j) signaling a scratch if the magnitude of the result of the accumulation exceeds an adjustable threshold value.

6. Method according to one of the preceding claims, **characterized in that** the course of a detected scratch in a respective scanned image (N) is determined and is communicated to an arrangement for correction or concealment of scratches.

7. Method according to one of the preceding claims, **characterized in that** the maximum width of the filtered-out vertical structures is adjustable.

## Revendications

1. Procédé de détection de rayures dans des signaux vidéo représentant des images de film, le procédé comprenant les étapes suivantes :
a) répartition des signaux vidéo représentant une image de film (N) dans un grand nombre de plages (41) englobant plusieurs lignes de l'image du film ;
b) filtrage de signaux de structures verticales s'étendant sur plusieurs lignes d'une plage (41) ;
c) détection de rayures dans les plages respectives (41) ;
d) détection si les rayures détectées aux positions respectives des plages (41) s'étendent, aux positions correspondantes, sur plusieurs plages (41) contiguës et détermination de la longueur totale des rayures ;
e) comparaison de la longueur totale, déterminée à l'étape d), des rayures respectives avec une valeur minimale prédéfinie.

2. Procédé selon la revendication 1, comprenant en outre les étapes suivantes :
f) balayage de la plage entre le bord inférieur d'une image précédente (N-1) et le bord supérieur de l'image balayée (N) ainsi que de la plage entre le bord inférieur de l'image balayée (N) et le bord supérieur d'une image suivante (N+1) ;
g) signalisation d'une rayure dans l'image balayée (N) lorsque la position d'une rayure détectée sur le bord supérieur de l'image balayée (N) ne dépasse pas un écart réglable par rapport à celle d'une rayure détectée sur le bord inférieur de l'image (N-1) précédant l'image balayée (N), ou lorsque la position d'une rayure détectée sur le bord inférieur de l'image balayée (N) ne dépasse par un écart réglable par rapport à celle d'une rayure détectée sur le bord supérieur de l'image suivant (N+1) l'image balayée, dans le sens des lignes.

3. Procédé selon la revendication 2, **caractérisé en ce qu'**une rayure dans l'image balayée (N) n'est signalée que lorsqu'une rayure est détectée dans une plage définie par les positions des rayures déterminées à l'étape g), dans l'image balayée (N).

4. Procédé selon l'une des revendications précédentes, **caractérisé en ce que** la détection des rayures à l'étape c) comprend le filtrage de signaux de structures verticales avec un contraste minimal par rapport aux contenus d'images qui les entourent.

5. Procédé selon la revendication 4, **caractérisé en ce que** le procédé comprend en outre les étapes suivantes :
h) attribution de valeurs d'accumulation aux points images de plusieurs lignes successives d'une plage (41) identifiés comme appartenant à la rayure, où la valeur 0 est attribuée aux points images avec modification de contraste faible ou sans modification de contraste, la valeur +1 est attribuée aux plages avec une modification de contraste vers la plage des blancs et la valeur -1 est attribuée aux plages avec une modification de contraste vers la plage des noirs ;
i) accumulation des valeurs d'accumulation attribuées sur les diverses lignes successives ;
j) signalisation d'une rayure lorsque le montant du résultat de l'accumulation dépasse une valeur seuil réglable.

6. Procédé selon l'une des revendications précédentes, **caractérisé en ce que** le tracé d'une rayure détectée est déterminée dans une image balayée respective (N) et est transmise à un dispositif pour correction ou masquage de rayures.

7. Procédé selon l'une des revendications précédentes, **caractérisé en ce que** la largeur maximale des structures verticales filtrées est réglable.
